# EUROPÄISCHE PATENTSCHRIFT

(11) **EP 0 827 719 B1**
(45) Veröffentlichungstag und Bekanntmachung des Hinweises auf die Patenterteilung: **05.06.2002**
(21) Anmeldenummer: 97114874.7
(22) Anmeldetag: 27.08.1997
(51) Int. Cl.: A61C 1/00, G02B 6/26, A61B 18/00

(54) **Medizinisches oder zahnmedizinisches Laserinstrument, insbesondere für Zahn-Wurzelkanalbehandlungen**
Medical or dental laser instrument, in particular for treating dental root canals
Instrument médical ou dentaire à laser, en particulier pour le traitement de canaux radiculaires

(30) Priorität: 02.10.1996 DE 19640803; 06.09.1996 DE 19636265
(43) Veröffentlichungstag der Anmeldung: 11.03.1998
(73) Patentinhaber: KALTENBACH & VOIGT GMBH & CO., 88400 Biberach (DE)
(72) Erfinder: Hack, Alexander, 88400 Biberach-Rissegg (DE); Schmitt, Ursula, 88400 Biberach (DE)
(74) Vertreter: Schmidt-Evers, Jürgen, Dipl.-Ing.

(56) Entgegenhaltungen:
- EP-A- 0 375 578
- EP-A- 0 413 660
- EP-A- 0 487 435
- WO-A-85/05262
- DE-A- 4 233 744
- US-A- 4 671 273
- US-A- 5 364 391
- US-A- 5 388 987
- US-A- 5 495 541

## Beschreibung

Die Erfindung bezieht sich auf ein medizinisches oder zahnmedizinisches Laserinstrument nach dem Oberbegriff des Anspruches 1.

Ein Laserinstrument dieser Art ist allgemein bekannt und z. B. in der DE 40 38 809 C1 und in der DE 42 33 744 A1 beschrieben.

Das Laserinstrument gemäß DE 40 38 809 C1 weist einen zweiten Lichtleiter an seinem vorderen Ende auf, der seitlich vom Laserinstrument absteht. Es sind dem Laserinstrument mehrere zweite Lichtleiter unterschiedlicher Querschnittsgröße zugeordnet, von denen ein zweiter Lichtleiter einen so geringen Durchmesser hat, daß es sich für eine Zahn-Wurzelkanalbehandlung eignet. Bei dieser bekannten Ausgestaltung erfolgt die Einkopplung in den zweiten Lichtleiter mittels eines Prismas, das die Laserstrahlen seitlich in den zweiten Lichtleiter hinein reflektiert. Zwischen dem ersten Lichtleiter und dem Prisma ist eine axial verstellbare Linse angeordnet, durch deren axialen Verstellung es ermöglicht wird, die Querschnittsgröße des Laserlichtbündels an die jeweilige Querschnittsgröße des zweiten Lichtleiters anzupassen.

DE 42 33 744 A1 zeigt ein Laserinstrument, mit drei in der Längsrichtung hintereinanderliegend angeordneten Lichtleitern, zwischen denen jeweils eine Einkopplungsvorrichtung mit zwei Linsen angeordnet ist. Bei dieser bekannten Ausgestaltung erstreckt sich der mittlere Lichtleiter gekrümmt. Hierdurch ist es möglich, den vordersten Lichtleiter schräg zur Mittelachse des Laserinstruments anzuordnen, ohne daß es einer Umlenkvorrichtung für das Laserlichtbündel bedarf. Die Enden der Lichtleiter liegen sich im Bereich der Einkopplungsvorrichtungen jeweils koaxial gegenüber.

Die Brauchbarkeit eines Laserinstruments ist u. a. abhängig von der Leistungsfähigkeit des am freien Ende des zweiten Lichtleiters austretenden Strahlenbündels. Dabei ist eine wesentliche Anforderung die, das Laserstrahlenbündel möglichst verlustarm in den Lichtleitern zu leiten und mit den Einkoppelvorrichtungen einzukoppeln. Um dies zu erreichen, darf die Numerische Apertur der Lichtleiter einen bestimmten Wert nicht unterschreiten. Andernfalls ist eine möglichst angestrebte Totalreflexion in den Lichtleitern nicht gewährleistet, sobald der Öffnungswinkel des zu übertragenden Lichtkegels über dem Grenzwinkel des Lichtleiters liegt, welcher der Numerischen Apertur des Lichtleiters entspricht.

Der Erfindung liegt die Aufgabe zugrunde, ein Laserinstrument der eingangs angegebenen Art so auszugestalten, daß bei Gewährleistung einer kleinen bzw. kurzen Bauweise das Laserlichtbündel in den zweiten Lichtleiter mit möglichst geringem Verlust oder verlustlos eingekoppelt werden kann.

Diese Aufgabe wird durch die Merkmale des Anspruches 1 gelöst.

Bei der erfindungsgemäßen Ausgestaltung weist der zweite Lichtleiter eine größere numerische Apertur auf als der erste Lichtleiter. Hierdurch ist der zweite Lichtleiter in der Lage, ein konvergentes Laserlichtbündel größeren spitzen Winkels aufzunehmen, ohne entsprechend viel Licht zu verlieren. Es läßt sich somit bei Gewährleistung einer kurzen Bauweise eine verlustarme oder verlustlose Einkopplung wesentlich verbessern.

Die der Erfindung zugrundeliegende Problematik liegt insbesondere dann vor, wenn das Laserlichtbündel in einen zweiten Lichtleiter einzukoppeln ist, dessen Querschnittsgröße kleiner bemessen ist, als die Querschnittsgröße des ersten Lichtleiters. Will man die Baulänge bzw. den Abstand der hinteren Endfläche des zweiten Lichtleiters von der Einkopplungsvorrichtung nicht vergrößern, dann führt die Querschnittsverringerung des zweiten Lichtleiters zwangsläufig zu einem entsprechenden Einkoppelungsverlust. Bei der erfindungsgemäßen Ausgestaltung kann dagegen das Laserlichtbündel ohne eine Vergrößerung der Baulänge bzw. des Abstandes verlustarm oder verlustlos eingekoppelt werden.

Das erfindungsgemäße Laserinstrument eignet sich somit bevorzugt für Zahn-Wurzelkanalbehandlungen, bei denen ein zweiter Lichtleiter sehr kleiner Querschnittsgröße unerlässlich ist, da andernfalls eine Wurzelbehandlung nicht möglich ist.

Der Erfindung liegt im weiteren die Aufgabe zugrunde, die Anpassungsfähigkeit des Laserinstruments an unterschiedlichen Behandlungsstellen zu verbessern.

Diese Aufgabe wird durch die Merkmale des Anspruches 8 gelöst.

Bei dieser erfindungsgemäßen Ausgestaltung ist der zweite biegsame Lichtleiter durch ein ihn umgebendes und vom Laserinstrument hervorragendes Röhrchen stabilisiert, das aus einem plastisch verformbaren Material solcher Festigkeit besteht, daß es mit der Bedienungshand gebogen werden kann. Es ist somit auf einfache Weise möglich, die Form des Röhrchens zu verändern und an die jeweilige Behandlungsstelle anzupassen. Hierdurch ist eine wesentliche Vereinfachung geschaffen, denn es ist nicht erforderlich, mehrere zweite Lichtleiter unterschiedlicher Formen vorzusehen, die jeweils auszutauschen wären, was mit einem beträchtlichen Aufwand verbunden wäre.

Der Erfindung liegt im weiteren die Aufgabe zugrunde, die Wirksamkeit eines Laserinstruments der im Oberbegriff des Anspruches 10 zu verbessern.

Diese Aufgabe wird durch die Merkmale des Anspruches 10 gelöst. Diese Ausgestaltung eignet sich insbesondere für eine Kanalbehandlung, wie eine Zahn-Wurzelkanalbehandlung. Der wesentliche Vorteil dieser Ausgestaltung besteht darin, daß der Lichtleiter aufgrund seiner Drehbarkeit rundum wirksam ist. Dies ist insbesondere bei der Behandlung von Zahn-Wurzelkanälen von großem Vorteil, weil Wurzelkanäle bekanntlich gekrümmt verlaufen und deshalb unzugänglich sind, so daß eine Behandlung schwierig und oft nicht an allen Stellen erfolgt, was die Qualität der Zahnbehandlung wesentlich beeinträchtigen kann., Dagegen ist bei der erfindungsgemäßen Ausgestaltung eine Rundumwirkung in jeder Tiefenposition des Lichtleiters im Wurzelkanal gewährleistet.

Der Erfindung liegt im weiteren die Aufgabe zugrunde, die Anpassungsfähigkeit eines Laserinstrument des im Oberbegriff des Anspruches 13 beschriebenen Art zu verbessern.

Diese Aufgabe wird durch die Merkmale des Anspruchs 13 gelöst.

Bei dieser erfindungsgemäßen Ausgestaltung sind die jweils einen Lichtleiter aufweisenden Halter mittels der Schnellschlußverbindung zum einen handhabungsfreundlich und zum anderen sicher an das Laserinstrument ankuppelbar. Der Behandler kann somit in einfacher und schneller weise sowie ohne besondere Aufmerksamkeit einen wahlweisen Lichtleiter an das Laserinstrument ankuppeln. Die Schnellschlußverbindung ist vorzugsweise so ausgestaltet, daß sie eine genaue axiale Positionierung des Halters gewährleistet, was im Hinblick auf eine möglichst verlustarme oder verlustlose Einkopplung des Laserstrahlenbündels von Bedeutung ist. Dabei ist es von besonderem Vorteil, die Schnellschlußverbindung so auszugestalten, daß sie jeweils den Halter gegen eine bestimmte Anschlag- oder Bezugsfläche drückt und dadurch die genau Positionierung herbeiführt.

In den Unteransprüchen sind Merkmale enthalten, die die Einkopplung des Laserlichtbündels und die Halterung des Lichtleiters weiter verbessern sowie zu kleinen und kostengünstig herstellbaren Ausgestaltungen führen, die sich vorteilhaft in den kleinen Raumverhältnissen eines Laser-Handinstruments integrieren lassen.

Nachfolgend werden die Erfindung und weitere durch sie erzielbare Vorteile anhand von bevorzugten Ausführungsbeispielen und Zeichnungen näher erläutert.

Es zeigen:
- Fig. 1: ein erfindungsgemäßes Laserinstrument im axialen Schnitt;
- Fig. 2: einen Halteschaft für einen zweiten Lichtleiter in der Rückansicht;
- Fig. 3: den Teilschnitt III-III in Fig. 1;
- Fig. 4 bis 12: unterschiedliche Formen des freien Endes eines LichtleiterBehandlungsabschnitts.

Die Hauptteile des Laserinstruments 1 sind ein sich vorzugsweise gerade erstreckendes stangenförmiges Handstück 2, ein Anschlußstück 3, mit dem das Handstück 2 verbindbar ist und an eine flexible Versorgungsleitung 4 anschließbar ist, in der sich ein erster Lichtleiter 5 durch das Anschlußstück 3 hindurch bis in das Handstück 2 hinein erstreckt, eine durch eine Schnellschlußverbindung gebildete Haltevorrichtung 6 für einen zweiten Lichtleiter 7, der mit einem Behandlungsabschnitt aus dem Handstück 2 herausragt, und eine Einkoppelvorrichtung 8, mit der das aus dem ersten Lichtleiter 5 austretende Laserlichtbündel 9 in das hintere Ende des zweiten Lichtleiters 7 einkoppelbar ist.

Zum lösbaren Verbinden des Handstücks 2 mit dem Anschlußstück 3 ist eine Steck/Drehkupplung 11 vorgesehen, mit einem Kupplungszapfen 11a und einer ihn aufnehmenden Kupplungsausnehmung 11b. Bei der vorliegenden Ausgestaltung ist der Kupplungszapfen 11a ein zylindrischer oder stufenzylindrischer Kupplungszapfen, der am Anschlußstück 3 angeordnet ist und von diesem vorragt. Die Kupplungsausnehmung 11b ist im hinteren Endbereich des Handstücks 2 angeordnet. Der Steck/Drehkupplung 11 ist eine lösbare Verrastungsvorrichtung 12 zugeordnet, die vorzugsweise manuell überdrückbar ist und somit beim Zusammenstecken selbststätig in Funktion tritt und durch überdrücken außer Funktion bringbar ist. Eine solche Verrastungsvorrichtung 12 ist vorzugsweise durch eine eine Verrastungskante bildende Ringnut 13a in der Außenmantelfläche des Kupplungszapfens 11a oder in der Innenmantelfläche der Kupplungsausnehmung 11b gebildet, in die ein Federelement, z.B. ein in einer gegenüberliegenden Ringnut angeordneter Federring 13c oder eine in ihre Wirkstellung durch eine federbeaufschlagte Kugel gebildet sein kann. Aufgrund des Vorhandenseins einer Ringnut 13a als Verrastungselement ist die Verrastungsvorrichtung 12 in der Lage, in jeder Drehstellung des Handstücks 2 lösbar einzurasten.

Das Handstück 2 besteht aus einem die optischen Elemente aufnehmenden stangenförmigen Innenteil 14 und einem das Innenteil 14 umgebenden Außenteil in Form einer Griffhülse 15, die in ihrem vorderen Endbereich kegelstumpfförmig verjüngt ist. Die Griffhülse 15 und das Innenteil 14 sind im vorderen Endbereich durch eine Passung 16a radial zentriert und in ihrem vorderen Endbereich durch einen Gewindeeingriff 16b miteinander verschraubt. Das Innenteil 14 weist einen axial durchgehenden Kanal unterschiedlicher Querschnittsabmessungen auf. In der hinteren Hälfte bildet dieser Kanal die Kupplungsausnehmung 11b, in der der zylindrische Kupplungszapfen 11a eingesteckt ist, der einen vorderen verjüngten Kupplungszapfenabschnitt aufweist. Im vorderen Endbereich des Kupplungszapfens 11a ist im Innenteil 14 eine Justiervorrichtung 17 angeordnet, die es ermöglicht, die Position des Kupplungszapfens 11a im Innenteil 14 radial einzustellen und festzustellen. Innerhalb des Kupplungszapfens 11a ist der erste Lichtleiter 5 in einer Durchgangsbohrung gelagert, wobei er in einem nach hinten gerichteten Abstand vom freien Ende des Kupplungszapfens 11a endet und somit vor Beschädigung geschützt angeordnet ist. In einem nach vorne gerichteten Abstand a vom vorderen Ende des ersten Lichtleiters 5 ist eine Linse 18 in einem zylindrischen Kanalabschnitt zentriert angeordnet, die mittels einer in ein Innengewinde des Kanalabschnitts eingeschraubte Hülsenmutter 19 gegen eine Schulterfläche 21 gespannt und somit fixiert ist. In einem nach vorne gerichteten Abstand b von der Linse 18 ist der zweite Lichtleiter 7 mittels der Haltevorrichtung 6 im Innenteil 14 positioniert gehalten.

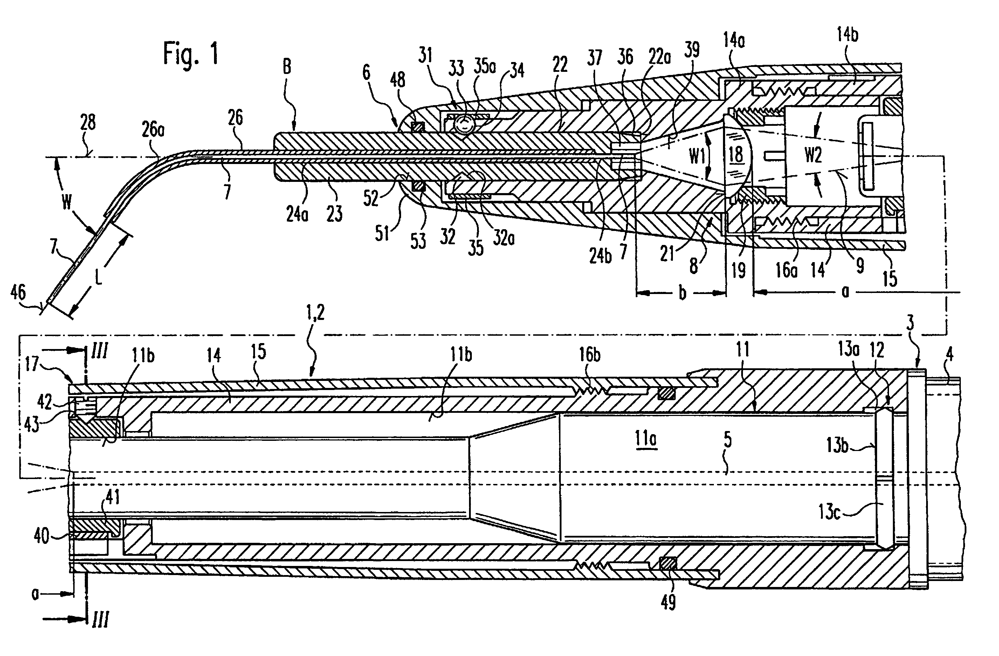

Die Haltevorrichtung 6 für den zweiten Lichtleiter 7 umfaßt mehrere Halteelemente. Im vorderen Endbereich des Innenteils 14 ist eine zylindrische Stufenbohrung 22 angeordnet, in der ein im Querschnitt entsprechend groß bemessener zylindrischer Halteschaft 23 mit geringem Bewegungsspiel von vorne bis zur Schulterfläche 22a der Stufenbohrung einsteckbar ist. Der Halteschaft 23 weist ebenfalls eine koaxiale zylindrische Stufenbohrung auf, deren größerer Stufenbohrungsabschnitt 24a sich von vorne sich über den größeren Teil der Länge des Halteschaftes 23 erstreckt, so daß im hinteren Teil des Halteschaftes der kleinere Stufenbohrungsabschnitt 24b angeordnet ist. Letzterer entspricht in seiner Querschnittsgröße der Querschnittsgröße des zweiten Lichtleiters 7. Im größeren Stufenbohrungsabschnitt 24a ist ein Stützrohr 26 eingesetzt, dessen Außenquerschnittsgröße an die Querschnittsgröße des Stufenbohrungabschnitts 24a und dessen Innenquerschnittsgröße an die Querschnittsgröße des zweiten Lichtleiters 7 angepaßt ist. Das Stützrohr 26 überragt den Halteschaft 23 um ein beträchtliches Maß von bei der vorliegenden Ausgestaltung etwa 15 bis 20 mm. Der zweite Lichtleiter 7 überragt außerdem das Stützrohr 26, ein beträchtliches Maß, hier etwa 28 mm. Das Stützrohr 26 und der zweite Lichtleiter 7 können sich je nach Verwendungsfall gerade oder seitlich abgebogen erstrecken, wie es Fig. 1 zeigt. Der Bogenabschnitt 26a dieser Biegung befindet sich etwa mittig im überragenden Bereich des Stützrohrs 26. Bei einer solchen Ausgestaltung besteht der Lichtleiter 7 aus einem manuell plastisch biegsamen Material, so daß er manuell in wahlweise in wahlweise Bögen gebogen werden kann. Bei der vorliegenden Ausgestaltung schließen der seitlich bzw. schräg abgebogene Abschnitt des Stützrohrs 26 und des Lichtleiters 7 mit der Längsmittelachse 28 des Laserinstruments 1 einen nach vorne offenen Winkel W von etwa 70° ein. Bei vorliegenden Ausführungsbeispiel beträgt der Außendurchmesser des Stützrohrs 26 etwa 1 mm.

Die Länge L, mit der der den Behandlungsabschnitt bildende Lichtleiter 7 das Stützrohr 26 überragt, kann für verschiedene Behandlungsfälle unterschiedlich groß sein.

Der Lichtleiter 7, das Stützrohr 26 und der Halteschaft 23 bilden eine Baueinheit, deren Teile zu einem Bauteil B fest miteinander verbunden sind, z. B. durch Kleben. Zur Sicherung des Halteschaftes 23 in seiner Steckverbindung ist eine manuell überdrückbare Verrastungsvorrichtung 31 vorgesehen, die selbsttätig elastisch verrastet und zum Lösen manuell überdrückbar ist. Eines der Elemente der Verrastungsvorrichtung ist eine Ringnut 32 in der Außenmantelfläche des Halteschaftes 23 oder in der Innenmantelfläche des Innenteils 14, in die ein zugehöriges Verrastungselement 33 unter Federkraft einzurasten vermag. Bei der vorliegenden Ausgestaltung ist die Ringnut 32 in der Außenmantelfläche des Halteschaftes 23 angeordnet und das Verrastungselement 33 ist durch eine Kugel gebildet, die in einem radialen Loch 34 im Innenteil 14 mit Bewegungsspiel gelagert ist. Das zugehörige Federelement ist eine Ringfeder, die das Verrastungselement 33 radial einwärts in die Verrastungsausnehmung drückt. Damit die Kugel bei herausgezogenem Halteschaft 23 nicht aus dem Loch 34 herausfällt, ist das Loch 34 an seinem inneren Ende so verjüngt, daß die Kugel um ein erforderliches Maß in die Ringnut 32 einzutauchen vermag, jedoch an einem völligen Austritt formschlüssig gehindert ist. Um radiale Baugröße zu sparen, ist in der Ringfeder 35 ein Loch 35a für die Kugel vorgesehen, in das diese einzutauchen vermag. Hierdurch ist die Ringfeder 35 zugleich gegen eine unbeabsichtigte axiale Verstellung gesichert.

Vorzugsweise ist die Anordnung so getroffen, daß die Verrastungsvorrichtung 31 das mit B bezeichnete Bauteil axial fest und in Umfangsrichtung überdrückbar positioniert. Ersteres wird dadurch erreicht, daß die Ringnut 32 eine hintere schräge Flanke 32a aufweist, gegen die die Kugel radial einwärts drückt und dadurch eine axial nach hinten gerichtete Kraftkomponente erzeugt, die den Halteschaft 23 und damit das Bauteil B gegen die Schulterfläche 21 bzw. Bezugsfläche drückt. Um das Einführen des Halteschaftes 23 zu erleichtern, weist diese an seinem hinteren Ende einen leichten Einführungskonus 36 auf, an dem die Kugel leicht aufzurollen vermag.

Das hintere Ende des zweiten Lichtleiters 7 befindet sich in einer rückseitigen Ausnehmung 37 des Halteschaftes 23, wobei das hintere Ende des Lichtleiters 7 bezüglich des hinteren Endes des Halteschaftes 23 nach vorne versetzt und somit vertieft und geschützt angeordnet ist. Um die Position des hinteren Endes des Lichtleiters 7 besser messen und kontrollieren zu können, weist der Halteschaft 23 an seinem hinteren Ende einen diametralen Schlitz 38 auf, durch den das hintere Ende des Lichtleiters 7 zum Messen oder zur Kontrolle zugänglich ist.

Im Bereich zwischen den Schulterflächen 21 und 22a ist ein sich nach vorne verjüngender kegelstumpfförmiger Kanalabschnitt 39 angeordnet, dessen nach vorne konvergente Form es ermöglicht, die Schulterfläche 22a auszubilden, obwohl die zylindrische Stufenbohrung 22 in ihrer Querschnittsgröße kleiner bemessen ist, als der die Linse 18 aufnehmende Kanalabschnitt.

Es ist zur Vereinfachung der Bauweise vorteilhaft, das Innenteil 14 aus zwei Teilen zu bilden, die miteinander verbunden sind. Bei der vorliegenden Ausgestaltung ist ein vorderer Innenteilabschnitt mit 14a und ein hinterer Innenteilabschnitt 14b vorgesehen, die miteinander verschraubt sind. Bei der vorliegenden Ausgestaltung befindet sich die Teilungsfuge zwischen diesen beiden Teilen im Bereich der Linse 18 bzw. Hülsenmutter 19, wodurch deren Montage bzw. Demontage erleichtert ist.

Die Justiervorrichtung 17 weist einen im Innenteil 18 mit radialem Bewegungsspiel angeordneten Justierring 41 auf, der einen vorderen tragenden Abschnitt der Kupplungsausnehmung 11b bildet, in den der Kupplungszapfen 11a mit geringem Bewegungsspiel sitzt. Der Justierring 41 ist radial allseitig verstellbar und in der jeweiligen Verstellposition feststellbar. Hierzu können mehrere, auf den Umfang verteilt angeordnete Einstellschrauben 42 dienen, die in zugehörigen radialen Gewindelöchern 43 im Innenteil 14 eingeschraubt sind und von außen gegen den Justierring 41 drückbar sind, wobei vorzugsweise im Justierring 41 kleine gegebenenfalls kegelförmige Ausnehmungen vorgesehen sind, in die die Einstellschrauben 42 mit kegelförmigen Spitzen einfassen können. Bei der vorliegenden Ausgestaltung sind nur zwei Einstellschrauben 42 mit zugehörigen Gewindelöchern 43 vorgesehen, deren Mittelachsen etwa einen rechten Winkel einschließen, wobei den Einstellschrauben 42 gegenüberliegend ein Federelement 40 zwischen dem Justierring 41 und dem Innenteil 14 angeordnet ist, das den Justierring 41 gegen die Einstellschrauben 42 elastisch beaufschlagt. Das Federelement 40 kann z. B. durch eine Blattfeder gebildet sein.

Bei dem ersten Lichtleiter 5 handelt es sich um eine bei flexiblen Versorgungsleitungen 4 üblichen Lichtleiter in Form einer Faser mit einem Durchmesser von etwa 500 µm bis 800 µ und einer Numerischen Apertur kleiner als 0,2, vorzugsweise zwischen 0,13 bis 0,18.

Der zweite Lichtleiter 7 weist eine kleinere Querschnittsgröße auf als der erste Lichtleiter 5, wobei diese kleinere Querschnittsgröße einen Durchmesser von etwa 200 µm bis 500 µm aufweist. Dieser Lichtleiter 7 ist folglich eine kleinere Faser, wobei jedoch die Numerische Apertur größer als 0,2 ist, vorzugsweise 0,26 bis 0,35 beträgt. Die Querschnittsgrößen der Fasern 5,7 und deren Numerische Aperturen stehen somit in einem reziproken Verhältnis zueinander. Diese Ausgestaltung ermöglicht es, aus einer großen Faser in eine kleine Faser umzukoppeln, ohne dabei durch die Querschnittsreduktion der Fasern 5, 7 entsprechend viel Laserlicht zu verlieren. Das von der Linse 18 fokussierte Laserlichtbündel kann somit einen Winkel W1 einschließen, der entsprechend größer ist als der divergente Winkel W2 des den ersten Lichtleiter 5 verlassenden Laserlichtbündels. Dabei ist auch zu berücksichtigen, daß der Abstand b verhältnismäß gering gehalten werden kann. Es zeigt sich somit, daß das Laserlicht leistungsfähiger übertragen werden kann, wobei gleichzeitig eine Anpassung des Lichtleiters 7 an kleine Querschnittsabmessungen möglich ist.

Das freie Ende des zweiten Lichtleiters 7 kann verschiedene Formen aufweisen, die jeweils unterschiedliche Behandlungsarten ermöglichen oder unterschiedlich wirksam sind.

Bei den Ausgestaltungen gemäß Fiug. 4 und 5 weist der zylindrische Lichtleiter 7 eine kugelabschnittsförmige Stirnfläche 44 auf, wobei gemäß Fig. 4 eine flache Kuppe und gemäß Fig. 5 eine halbkugelförmige Kuppe vorgesehen ist.

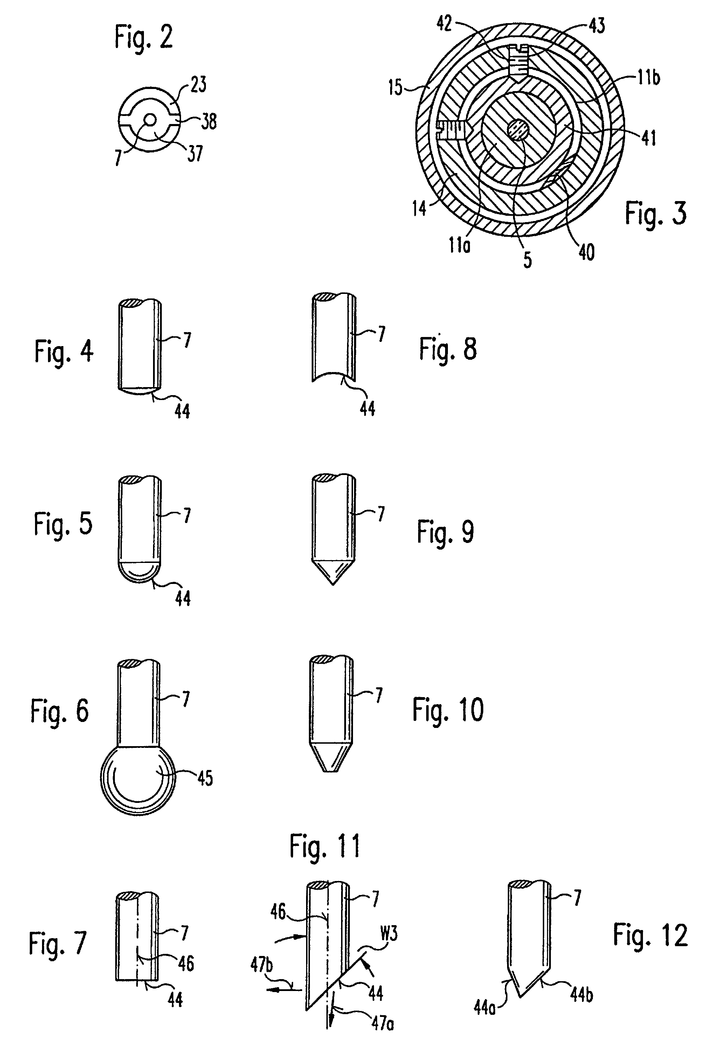

Gemäß Fig. 6 ist am freien Ende des zylindrischen Lichtleiters 7 eine kugelförmige Verdickung 45 vorgesehen.

Gemäß Fig. 7 ist die Stirnfläche 44 eben und rechtwinkelig zur Längsmittelachse 46 des Lichtleiters 7 ausgebildet.

Bei der Ausgestaltung nach Fig. 8 ist die Stirnfläche 44 konkav geformt, wobei sie vorzugsweise gerundet ist. Dabei kann es sich um eine Rundung handeln, die quer durchgehend prismatisch ist oder kugelabschnittförmig ist.

Gemäß Fig. 9 und 10 weist das freie Ende des zylindrischen Lichtleiters 7 eine kegelförmige (Fig. 9) oder kegelstumpfförmige (Fig. 10) Spitze auf.

Bei der Ausgestaltung gemäß Fig. 11 ist ein axialer Austritt 47a und/oder seitlicher Austritt 47b für das Laserlicht vorgesehen. Bei dieser Ausgestaltung weist das freie Ende des Lichtleiters 7 eine vorzugsweise ebene und schräg verlaufende Stirnfläche 44 auf, deren Winkel W3 bezüglich der Längsmittelachse 46 unterschiedlich sein kann. Je nach Größe dieses Winkels findet unter Berücksichtigung der physikalischen Gesetzmäßigkeiten eine Teil- oder Totalreflexion zur gegenüberliegenden Seite und somit zum seitlichen Lichtaustritt 47b hin statt. Dies ist für eine Behandlung in einem Kanal, insbesondere in einem Zahn-Wurzelkanal von großem Vorteil, da die Wirksamkeit des Lichtleiters 7 axial, axial und seitlich oder seitlich gerichtet ist. Hierdurch ist es möglich, die Kanalwand dirket zu behandeln und/oder spanabhebend abzutragen, wie es bei einer Laserbestrahlung an sich üblich ist.

Eine weitere Variante zeigt Fig. 12, bei der zu beiden Seiten keilförmige Stirnflächenteile 44a, 44b vorgesehen sind, die einen stumpfen oder spitzen Winkel zwischen sich einschließen können und/oder symmetrisch oder exzentrisch angeordnet sein können, wie es Fig. 12 zeigt.

Es ist im weiteren von Vorteil, den zweiten Lichtleiter 7 drehbar zu lagern und mittels eines Drehantriebs während des Funktionsbetriebs des Laserinstrumentes 1 anzutreiben. Eine solche Ausgestaltung eignet sich insbesondere für einen Lichtleiter 7 mit einem wenigstens teilweisen oder vollständigen seitlichen oder allseitigen Lichtaustritt 47b. Der nicht dargestellte Drehantrieb kann unmittelbar oder mittelbar am Lichtleiter 7 angreifen. Bei der vorliegenden Ausgestaltung könnte der Drehantrieb am Halteschaft 23 angreifen.

Es ist im weiteren von Vorteil, der Behandlungsstelle eine Behandlungsflüssigkeit, z. B. Wasser und/oder ein Wasser/Luftgemisch bzw. Spray zuzuführen. Dies kann durch einen oder zwei im Handstück längs verlaufende Kanäle erfolgen, wie es an sich bekannt ist. Bei der vorliegenden Ausgestaltung könnte der wenigstens eine Kanal im Bereich des Halteschaftes 23 oder im Bereich des Stützrohres 26 angeordnet sein und z. B. durch eine Nut jeweils an der inneren Mantelfläche ausgebildet sein, so daß der Austritt der Behandlungsflüssigkeit am vorderen Ende des Halteschaftes 23 oder des Stützrohres 26 erfolgt. Im ersten Fall kann die Behandlungsflüssigkeit am Stützrohr 26 und am Behandlungsabschnitt des Lichtleiters 7 und im zweiten Fall am Behandlungsabschnitt des Lichtleiters 7 zur Behandlungsstelle entlangrinnen.

Es ist von Vorteil, dem Laserinstrument 1 mehrere Bauteile B austauschbar zuzuordnen, die sich voneinander unterscheiden, z. B. bezüglich der Länge 1 des Behandlungsabschnitts des zweiten Lichtleiters und/oder seiner Querschnittsgröße und/oder der Biegsamkeit des Stützrohrs.

Wie aus Fig. 1 zu entnehmen ist, dichtet die Griffhülse 15 das Innenteil 14 mittels am vorderen Ende und am hinteren Ende angeordneten Dichtungsringen 48, 49 ab. Bei der vorliegenden Ausgestaltung überdeckt die Griffhülse 15 das vordere Ende des Innenteils 14 kappenförmig, wobei das vordere Ende der Kappe 51 eine koaxiale Bohrung 52 aufweist, deren Querschnittsgröße an die Querschnittsgröße des Halteschaftes 23 angepaßt und durch den zugehörigen Dichtungsring 48 abgedichtet ist, der in eine Ringnut 53 in der Kappe 51 angeordnet sein kann.

Es ist vorteilhaft, für eine vorbeschriebene Behandlung zwecks Bestrahlung und/oder spanabhebendem Abtrag eines Gewebes einen Er:YAG-Laser zu verwenden, der von einer mit der flexiblen Versorgungsleitung 4 verbundenen Steuer- und Versorgungseinrichtung durch die flexible Versorgungsleitung 4 und durch die Kupplung 11 hindurch zum Handstück 1 geleitet wird. Es hat sich bei Versuchen gezeigt, daß sich ein Er:YAG-Laserlicht mit einer Wellenlänge von etwa 2,94 µm und einer Pulsdauer von etwa 200 bis 500 µs, vorzugsweise etwa 300 µs, gut eignet. Dabei werden vorteilhafte Ergebnisse bei einer Pulsenergieleistung von etwa 50 bis 500 mJ erreicht. Eine zugehörige Laser-Erzeugungseinrichtung ist vorzugsweise so ausgestaltet, daß die Pulsenergie veränderlich und somit einstellbar ist.

Der erste und/oder der zweite Lichtleiter 5, 7 können aus Kunststoff und/oder Glas bzw. Quarz bestehen. Die Einkoppelvorrichtung ist vorzugsweise so ausgebildet, daß Totalreflexion stattfinden kann. Letzeres wird dadurch begünstigt, daß der erste und/oder der zweite Lichtleiter 5, 7 aus einem Kern und einer Hülle aus Materialien unterschiedlicher Brechungswinkel bestehen, was an sich bekannt ist.

## Patentansprüche

1. Medizinisches oder zahnmedizinisches Laserinstrument (1), inbesondere für Zahn-Wurzelkanalbehandlungen, mit
- einem Handstück (2),
- einem Anschlußteil (3), mit dem das Handstück (2) an eine Versorgungsleitung (4) anschließbar ist
- einem ersten Lichtleiter (5), der sich längs durch die Versorgungsleitung (4) und das Anschlußteil (3) bis zum Handstück (2) erstreckt,
- einem im vorderen Endbereich des Laserinstruments (1) angeordneten zweiten Lichtleiter (7), dessen hinteres Ende koaxial zum vorderen Ende des ersten Lichtleiters (5) angeordnet ist,
- und einer Einkoppelvorrichtung (8) zum Einkoppeln des aus dem ersten Lichtleiter (5) austretenden Laserlichtbündels in den zweiten Lichtleiter (7),
- wobei die Querschnittsgröße des zweiten Lichtleiters (7) kleiner ist als die Querschnittsgröße des ersten Lichtleiters (5),
**dadurch gekennzeichnet, daß** die Querschnittsgröße des zweiten Lichtleiters (7) etwa 200 µm bis 500 µm beträgt und der zweite Lichtleiter (7) eine größere numerische Apertur aufweist als der erste Lichtleiter (5).

2. Laserinstrument nach Anspruch 1,
**dadurch gekennzeichnet,**
**daß** die Querschnittsgröße des ersten Lichtleiters (5) etwa 500 µm bis 800 µm beträgt.

3. Laserinstrument nach Anspruch 1 oder 2,
**dadurch gekennzeichnet,**
**daß** die Numerische Apertur des zweiten Lichtleiters (7) größer als 0,2 ist, vorzugsweise etwa 0,26 bis 0,35 beträgt und/oder die numerische Apertur des ersten Lichtleiters (5) kleiner als 0,2 ist, vorzugsweise etwa 0,13 bis 0,18 beträgt.

4. Laserinstrument nach einem der vorherigen Ansprüche,
**dadurch gekennzeichnet,**
**daß** der zweite Lichtleiter (7) in einem Stützrohr (26) angeordnet ist, das vom Laserinstrument (1) oder vom Handstück (2) vorragt.

5. Laserinstrument nach Anspruch 4,
**dadurch gekennzeichnet,**
**daß** das Stützrohr (26) vorzugsweise in seinem mittleren Bereich mit dem biegsamen zweiten Lichtleiter (7) gerundet abgebogen verläuft und mit der Längsmittelachse (28) des Laserinstruments (1) einen vorzugseweise spitzen Winkel (W) einschließt, der nach vorne offen ist.

6. Laserinstrument nach Anspruch 4 oder 5,
**dadurch gekennzeichnet,**
**daß** der zweite Lichtleiter (7) biegsam ist und das Stützrohr (26) aus plastisch manuell biegsamem Material, insbesondere Metall, vorzugsweise Stahl, besteht.

7. Laserinstrument nach einem der vorhergehenden Ansprüche 4 bis 6,
**dadurch gekennzeichnet,**
**daß** der zweite Lichtleiter (7) das Stützrohr (26) nach vorne überragt.

8. Laserinstrument nach einem der vorherigen Ansprüche,
**dadurch gekennzeichnet,**
**daß** der zweite Lichtleiter (7) mit einem ihn aufnehmenden Halteschaft (23) drehbar gelagert ist und ohne oder mit einem Drehantrieb drehbar ist.

9. Laserinstrument nach einem der vorherigen Ansprüche,
**dadurch gekennzeichnet,**
**daß** der zweite Lichtleiter (7) einen teilweise oder vollständigen seitlichen oder auch radial allseitigen Lichtaustritt (47b) aufweist.

10. Laserinstrument nach einem der vorherigen Ansprüche,
**dadurch gekennzeichnet,**
**daß** der zweite Lichtleiter 87) in einem ihn vorzugsweise koaxial aufnehmenden Halteschaft (23) aufgenommen ist, der durch eine Schnellschlußverbindung lösbar mit dem Laserinstrument (1) oder dem Handstück (2) verbunden ist.

11. Laserinstrument nach Anspruch 10,
**dadurch gekennzeichnet,**
**daß** die Schnellschlußverbindung durch eine Steckverbindung mit einer Verrastungsvorrichtung (31) gebildet ist, die zum Lösen vorzugsweise manuell überdrückbar ist.

12. Laserinstrument nach Anspruch 11,
**dadurch gekennzeichnet,**
**daß** die Verrastungsvorrichtung (31) eine Ringnut (32) aufweist, in die ein Verrastungselement (33), vorzugsweise eine Kugel, elastisch oder unter Federkraft einrastet.

13. Laserinstrument nach Anspruch 12,
**dadurch gekennzeichnet,**
**daß** die Ringnut (32) im Halteschaft (23) angeordnet ist.

14. Laserinstrument nach einem der vorherigen Ansprüche,
**dadurch gekennzeichnet,**
**daß** der Halteschaft (23) das Laserinstrument (1) oder des Handstücks (2) überragt.

15. Laserinstrument nach einem der vorherigen Ansprüche,
**dadurch gekennzeichnet,**
**daß** der zweite Lichtleiter (7) und der Halteschaft (23) und/oder das Stützrohr (26) ein fest miteinander verbundenes Bauteil (B) bilden.

16. Laserinstrument nach einem vorherigen Ansprüche,
**dadurch gekennzeichnet,**
**daß** mehrere zweite Lichtleiter (7) oder mehrere Bauteile (B) vorgesehen sind, die sich bezüglich der Querschnittsgröße des Lichtleiters (7) und/oder seiner Länge, insbesondere seiner vom Stützrohr (26) vorragenden Länge (L) und/oder seines mit der Längsmittelachse (28) des Laserinstruments (1) einschließenden Winkels (W) voneinander unterscheiden.

## Claims

1. Medical or dental-medical laser instrument (1), in particular for tooth root canal treatments, having
- a handpiece (2),
- a connection part (3), with which the handpiece (2) can be connected to a supply line (4)
- a first light conductor (5), which extends longitudinally through the supply line (4) and the connection part (3) to the handpiece (2),
- a second light conductor (7), arranged in the forward end region of the laser instrument (1), the rearward end of which light conductor is arranged co-axially with the forward end of the first light conductor (5),
- and a coupling device (8) for coupling the laser light bundle emerging from the first light conductor (5) into the second light conductor (7),
- the cross-sectional size of the second light conductor (7) being smaller than the cross-sectional size of the first light conductor (5),
**characterised in that**,
the cross-sectional size of the second light conductor (7) is about 200 µm to 500 µm and the second light conductor (7) has a larger numerical aperture than the first light conductor (5).

2. Laser instrument according to claim 1,
**characterised in that**,
the cross-sectional size of the first light conductor (5) is about 500 µm to 800 µm.

3. Laser instrument according to claim 1 or 2,
**characterised in that**,
the numerical aperture of the second light conductor (7) is greater than 0.2, is preferably about 0.26 to 0.35 and/or the numerical aperture of the first light conductor (5) is smaller than 0.2, preferably about 0.13 to 0.18.

4. Laser instrument according to any preceding claim,
**characterised in that**,
the second light conductor (7) is arranged in a support tube (26) which projects from the laser instrument (1) or from the handpiece (2).

5. Laser instrument according to claim 4,
**characterised in that**,
the support tube (26) preferably in its middle region, develops with the flexible second light conductor (7) bent in a rounded manner and encloses a preferably acute angle (W) with the longitudinal middle axis (28) on the laser instrument (1), which angle is open forwardly.

6. Laser instrument according to claim 4 or 5,
**characterised in that**,
the second light conductor (7) is flexible and the support tube (26) is of plastic, manually flexible material, in particular metal, preferably steel.

7. Laser instrument according to any of claims 4 to 6,
**characterised in that**,
the second light conductor (7) projects forwardly beyond the support tube (26).

8. Laser instrument according to any preceding claim,
**characterised in that**,
the second light conductor (7) is, with a holder shaft (23) which receives it, rotatably mounted, and is rotatable without or with a rotary drive.

9. Laser instrument according to any preceding claim,
**characterised in that**,
the second light conductor (7) has a light exit (47b) which is partly or completely to the side, or a radially all-round light exit.

10. Laser instrument according to any preceding claim,
**characterised in that**,
the second light conductor (7) is received in a holder shaft (23), which receives it preferably co-axially, which is releasably connected with the laser instrument (1) or with the handpiece (2) by means of a quick-fastening connection.

11. Laser instrument according to claim 10,
**characterised in that**,
the quick-fastening connection is formed by means of a plug-in connection having a latching device (31), which can be overcome, preferably manually, for release.

12. Laser instrument according to claim 11,
**characterised in that**,
the latching device (31) has an annular groove (32) into which a latch element (33), preferably a ball, engages elastically or under spring force.

13. Laser instrument according to claim 12,
**characterised in that**,
the annular groove (32) is arranged in the holder shaft (23).

14. Laser instrument according to any preceding claim,
**characterised in that**,
the holder shaft (23) projects beyond the laser instrument (1) or the handpiece (2).

15. Laser instrument according to any preceding claim,
**characterised in that**,
the second light conductor (7) and the holder shaft (23) and/or the support tube (26) form a component (B) fixedly connected with one another.

16. Laser instrument according to any preceding claim,
**characterised in that**,
a plurality of second light conductors (7) or a plurality of components (B) are provided which differ from one another with respect to the cross-sectional size of the light conductor (7) and/or its length, in particular its length (L) projecting from the support tube (26), and/or with respect to its angle (W) enclosed with the longitudinal middle axis (28) of the laser instrument (1).

## Revendications

1. Instrument médical ou dentaire à laser (1), en particulier destiné aux traitements des canaux radiculaires dentaires, comportant
- une poignée (2),
- une partie de connexion (3), avec laquelle la poignée (2) peut être raccordée à une conduite d'alimentation (4),
- un premier conducteur de lumière (5) qui s'étend jusqu'à la poignée (2) par la conduite d'alimentation (4) et la partie de connexion (3),
- un second conducteur de lumière (7) disposé dans la zone d'extrémité avant de l'instrument à laser (1), dont l'extrémité arrière est disposée de façon coaxiale à l'extrémité avant du premier conducteur de lumière (5),
- et un dispositif de couplage (8) pour le couplage du faisceau de lumière laser sortant du premier conducteur de lumière (5) dans le second conducteur de lumière (7),
- moyennant quoi la grandeur de section transversale du second conducteur de lumière (7) est inférieure à la grandeur de section transversale du premier conducteur de lumière (5),
**CARACTERISE EN CE QUE**,
La grandeur de section transversale du second conducteur de lumière (7) est d'environ 200 µm jusqu'à 500 µm et le second conducteur de lumière (7) présente une plus grande ouverture numérique que le premier conducteur de lumière (5).

2. Instrument à laser selon la revendication 1,
**CARACTERISE EN CE QUE**,
La grandeur de section transversale du premier conducteur de lumière (5) est d'environ 500 µm jusqu'à 800 µm.

3. Instrument à laser selon la revendication 1 ou 2,
**CARACTERISE EN CE QUE**,
L'ouverture numérique du second conducteur de lumière (7) est supérieure à 0,2, de préférence d'environ 0,26 jusqu'à 0,35 et/ou l'ouverture numérique du premier conducteur de lumière (5) est inférieure à 0,2, de préférence elle est d'environ 0,13 à 0,18.

4. Instrument à laser selon l'une des revendications précédentes,
**CARACTERISE EN CE QUE**,
Le second conducteur de lumière (7) est disposé dans un tube de support (26) qui fait saillie par rapport à l'instrument à laser (1) ou à la poignée (2).

5. Instrument à laser selon la revendication 4,
**CARACTERISE EN CE QUE**,
Le tube de support (26) s'étend en flexion arrondie de préférence dans sa partie médiane avec le second conducteur de lumière flexible (7) et inclut avec l'axe médian longitudinal (28) de l'instrument à laser (1) un angle de préférence aigu (W) qui est ouvert vers l'avant.

6. Instrument à laser selon la revendication 4 ou 5,
**CARACTERISE EN CE QUE**,
Le second conducteur de lumière (7) est flexible et le tube de support (26) consiste en un matériau plastiquement, manuellement flexible, en particulier un métal, de préférence de l'acier.

7. Instrument à laser selon l'une des revendications précédentes 4 à 6,
**CARACTERISE EN CE QUE**,
Le second conducteur de lumière (7) fait saillie vers l'avant par rapport au tube de support (26).

8. Instrument à laser selon l'une des revendications précédentes,
**CARACTERISE EN CE QUE**,
Le second conducteur de lumière (7) est monté de façon rotative avec un fût de retenue (23) le recevant et **en ce qu'**il est rotatif sans ou avec un mécanisme d'entraînement rotatif.

9. Instrument à laser selon l'une des revendications précédentes,
**CARACTERISE EN CE QUE**,
Le second conducteur de lumière (7) présente une sortie de lumière (47b) partiellement ou totalement latérale ou également radialement sur tous les côtés.

10. Instrument à laser selon l'une des revendications précédentes,
**CARACTERISE EN CE QUE**,
Le second conducteur de lumière (87) est logé dans un fût de retenue (23) le recevant de préférence coaxialement et qui est raccordé par une attache rapide de façon amovible avec l'instrument à laser (1) ou avec la poignée (2).

11. Instrument à laser selon la revendication 10,
**CARACTERISE EN CE QUE**,
L'attache rapide est formée par un raccord enfichable avec un dispositif d'encliquetage (31) qui est de préférence manuellement compressible pour le détachement.

12. Instrument à laser selon la revendication 11,
**CARACTERISE EN CE QUE**,
Le dispositif d'encliquetage (31) présente une gorge annulaire (32) dans laquelle un élément d'encliquetage (33), de préférence une sphère, s'encliquette élastiquement ou sous l'effet de la force d'un ressort.

13. Instrument à laser selon la revendication 12,
**CARACTERISE EN CE QUE**,
La gorge annulaire (32) est disposée dans le fût de retenue (23).

14. Instrument à laser selon l'une des revendications précédentes,
**CARACTERISE EN CE QUE**,
Le fût de retenue (23) fait saillie par rapport à l'instrument à laser (1) ou la poignée (2).

15. Instrument à laser selon l'une des revendications précédentes,
**CARACTERISE EN CE QUE**,
Le second conducteur de lumière (7) et le fût de retenue (23) et/ou le tube de support (26) solidement raccordés entre eux, forment un élément de construction (B).

16. Instrument à laser selon l'une des revendications précédentes,
**CARACTERISE EN CE QUE**,
sont prévus plusieurs seconds conducteurs de lumière (7) ou plusieurs éléments de construction (B) qui se différencient entre eux en ce qui concerne la grandeur de section transversale du conducteur de lumière (7) et/ou sa longueur, en particulier sa longueur (L) en saillie par rapport au tube de support (26) et/ou son angle (W) inclus avec l'axe médian longitudinal (28) de l'instrument à laser (1)
